# EUROPÄISCHE PATENTSCHRIFT

(11) **EP 4 117 969 B1**
(45) Veröffentlichungstag und Bekanntmachung des Hinweises auf die Patenterteilung: **17.07.2024**
(21) Anmeldenummer: 21710419.9
(22) Anmeldetag: 03.03.2021
(51) Int. Cl.: B60R 11/02

(54) **ARMATURENBRETT FÜR EIN FAHRZEUG, FAHRZEUG MIT DEM ARMATURENBRETT UND HALTEEINRICHTUNG ZUM HALTEN EINES MOBILEN GERÄTS ZUR VERWENDUNG IN DEM ARMATURENBRETT**
DASHBOARD FOR A VEHICLE, VEHICLE WITH THE DASHBOARD, AND HOLDING DEVICE FOR HOLDING A MOBILE DEVICE FOR USE IN THE DASHBOARD
TABLEAU DE BORD POUR VÉHICULE, VÉHICULE PRÉSENTANT LE TABLEAU DE BORD ET DISPOSITIF DE MAINTIEN POUR MAINTENIR UN DISPOSITIF MOBILE À UTILISER DANS LE TABLEAU DE BORD

(30) Priorität: 11.03.2020 DE 102020203090
(43) Veröffentlichungstag der Anmeldung: 18.01.2023
(73) Patentinhaber: Stellantis Auto SAS, 78300 Poissy (FR)
(72) Erfinder: JORDAN, Frank, 65428 Rüsselsheim am Main (DE)
(74) Vertreter: Spitzfaden, Ralf
(86) Internationale Anmeldenummer: PCT/EP2021/055326
(87) Internationale Veröffentlichungsnummer: WO 2021/180542

(56) Entgegenhaltungen:
- DE-A1- 102016 002 456
- DE-A1- 102016 213 688
- FR-A1- 3 059 612

## Beschreibung

### Technisches Gebiet:

Die Erfindung betrifft ein Armaturenbrett für ein Fahrzeug mit den Merkmalen des Anspruchs 1 und eine Anordnung aus dem Armaturenbrett und aus einem mobilen Gerät mit den Merkmalen des Anspruchs 8. Die Erfindung betrifft weiterhin ein Fahrzeug mit dem Armaturenbrett und/oder mit der Anordnung und eine Halteeinrichtung zum Halten eines mobilen Geräts zur Verwendung in dem Armaturenbrett.

### Hintergrund:

Halterungen für mobile Geräte, die in einem Fahrzeug mitgeführt werden, sind aus dem Stand der Technik hinreichend bekannt. Solche Halterungen sind oftmals an einem Armaturenbrett oder einer Mittelkonsole des Fahrzeugs angeordnet. Offenbart sind bereits Halterungen, die bewegliche Elemente umfassen. Zum Beispiel gibt es Halterungen, die in der Mittelkonsole versenkt sind und aus dieser zur Nutzung ausgefahren werden können. Beispielsweise beschreibt die Druckschrift DE 10 2012 018 827 B3 einen Halter für mobile Geräte, welcher in einer Instrumententafel integriert ist. Der Halter ist aus zwei separaten Halterteilen ausgeführt, die an verschiedenen Stellen in der Instrumententafel integriert sind.

Aus dem Stand der Technik sind ferner DE 10 2016 002456 A1, die FR 3 059 612 A1 und die DE 10 2016 213 688 A1 bekannt. Die DE 10 2016 002456 A1 offenbart ein Armaturenbrett nach dem Oberbegriff von Anspruch 1.

### Beschreibung:

Der Erfindung liegt die Aufgabe zugrunde, eine funktionale, ergonomische und optisch verbesserte Lösung zur Halterung eines mobilen Geräts an einem Armaturenbrett eines Fahrzeugs bereitzustellen. Diese Aufgabe wird durch ein Armaturenbrett für ein Fahrzeug mit den Merkmalen des Anspruchs 1, durch eine Anordnung aus dem Armaturenbrett und aus einem mobilen Gerät mit den Merkmalen des Anspruchs 8, durch ein Fahrzeug mit dem Armaturenbrett gemäß dem Anspruch 9, durch ein Fahrzeug mit der Anordnung gemäß dem Anspruch 10 und durch eine Halteeinrichtung für ein mobiles Gerät zur Verwendung in dem Armaturenbrett gemäß dem Anspruch 11 gelöst. Ausführungsformen der Erfindung ergeben sich aus den Unteransprüchen, der nachfolgenden Beschreibung und/oder den beigefügten Figuren.

Es wird ein Armaturenbrett für ein Fahrzeug, zum Beispiel für einen Pkw oder Lkw, vorgeschlagen. Das Armaturenbrett weist eine Anzeigeeinrichtung auf, welche zur Anzeige von Fahrzeugbetriebsdaten, Kontroll- und/oder Servicedaten ausgebildet ist. Die Anzeigeeinrichtung ist bevorzugt als eine Instrumententafel ausgebildet. Sie umfasst insbesondere ein Display zur digitalen Anzeige der Fahrzeugbetriebsdaten, Kontroll- und/oder Servicedaten. Beispielsweise ist die Anzeigeeinrichtung als ein Kombinationselement und/oder als ein sogenanntes Instrument Cluster ausgebildet. Vorzugsweise ist die Anzeigeeinrichtung in Fahrtrichtung hinter einem Lenkrad des Fahrzeugs angeordnet. Insbesondere erstreckt sich die Anzeigeeinrichtung quer zu der Fahrtrichtung von der Fahrerseite zu einer Mitte des Fahrzeugs hin, welche insbesondere durch eine Mittelkonsole des Fahrzeugs festgelegt ist. Im Speziellen reicht die Anzeigeeinrichtung in etwa, nahezu oder im Wesentlichen bis zu der Mitte des Fahrzeugs.

Bei den Fahrzeugbetriebsdaten handelt es sich zum Beispiel um eine Fahrgeschwindigkeit des Fahrzeugs und um eine Motordrehzahl des Fahrzeugs. Die Kontrolldaten umfassen insbesondere eine Tankanzeige und/oder eine Ölstandanzeige. Die Servicedaten können z.B. Navigationsdaten des Fahrzeugs oder Informationsdaten über eine Umgebung des Fahrzeugs und/oder über einen zu erwartenden Verkehrsfluss oder Störungen auf der mit dem Fahrzeug zu fahrenden Strecke umfassen. Die Informationsdaten können unter anderem auch Informationen hinsichtlich im Fahrzeug verfügbarer und/oder aktuell abzuspielender Musikdateien und/oder Radiosender umfassen.

Das Armaturenbrett umfasst eine Halteeinrichtung für ein mobiles Gerät. Das mobile Gerät ist zum Beispiel als ein Smartphone oder Tablet ausgebildet. Die Halteeinrichtung ist dazu ausgebildet, das mobile Gerät in dem Fahrzeug sicher zu halten und einen einfachen Zugriff durch einen Fahrer und optional ergänzend durch einen Beifahrer des Fahrzeugs auf das mobile Gerät zu gewährleisten.

Die Halteeinrichtung ist in dem Armaturenbrett so integriert, dass das mobile Gerät front- und/oder flächenbündig mit der Anzeigeeinrichtung anordbar ist, insbesondere wenn es in der Halteeinrichtung gehalten ist. Vorzugsweise ist die Anzeigeeinrichtung so in dem Armaturenbrett integriert und/oder das mobile Gerät so in der Halteeinrichtung anordbar, dass es die Anzeigeeinrichtung in ihrer Längserstreckung quer zu der Fahrtrichtung optisch ergänzt und/oder verlängert. Insbesondere ist die Halteeinrichtung dazu ausgebildet, das mobile Gerät visuell so in das Armaturenbrett zu integrieren, dass es ein ergänzendes Display der Anzeigeeinrichtung bilden kann.

Vorteilhaft ist, dass die Halteeinrichtung es ermöglicht, das mobile Gerät visuell ansprechend in das Armaturenbrett zu integrieren und es sicher auch während der Fahrt mit dem Fahrzeug zu halten. Insbesondere ist die Halteeinrichtung dazu ausgebildet, eine Integration des mobilen Geräts in das Armaturenbrett in einem ergonomischen Design bereitzustellen und eine funktionale Bedienung durch den Fahrer und optional ergänzend durch den Beifahrer zu ermöglichen.

In einer möglichen Ausführungsform der Erfindung ist die Halteeinrichtung benachbart zu der Anzeigeeinrichtung in dem Armaturenbrett integriert. Die Halteeinrichtung kann auch angrenzend, insbesondere unmittelbar angrenzend, an die Anzeigeeinrichtung in dem Armaturenbrett integriert sein. Vorzugsweise schließt sich die Halteeinrichtung seitlich an die Anzeigeeinrichtung an, wobei die Halteeinrichtung in der Mitte oder im Wesentlichen in der Mitte des Armaturenbretts, insbesondere in einem Bereich oberhalb der Mittelkonsole des Fahrzeugs, angeordnet sein kann. Optisch kann dadurch der Eindruck erzeugt werden, dass sich die Anzeigeeinrichtung, welche durch das in der Halteeinrichtung gehaltene mobile Gerät optisch ergänzt und/oder verlängert ist, von der Fahrerseite bis zu der Mitte des Fahrzeugs erstreckt. Insbesondere bilden die Anzeigeeinrichtung und das in der Halteeinrichtung gehaltene mobile Gerät eine optische Einheit.

Gemäß der Erfindung ist vorgesehen, dass die Halteeinrichtung mindestens einen Aufnahmebereich umfasst, welcher zur Aufnahme des mobilen Geräts ausgebildet ist. Vorzugsweise ist der Aufnahmebereich dazu ausgebildet, das mobile Gerät formschlüssig in sich aufzunehmen und zu halten. Beispielsweise ist der Aufnahmebereich quaderförmig ausgebildet. Insbesondere kann das mobile Gerät so in dem Aufnahmebereich aufgenommen werden, dass es mit seiner Sichtseite, insbesondere mit einer Vorderseite des Displays des mobilen Geräts, mit der Anzeigeeinrichtung, insbesondere mit deren Display front- und flächenbündig angeordnet ist und/oder fluchtet.

Optional umfasst der Aufnahmebereich mehrere, z.B. drei Aufnahmeabschnitte, zwischen denen das mobile Gerät an seinen Kanten, z.B. an seiner Unterkante und an seinen beiden Seitenkanten, gehalten werden kann. Die Aufnahmebereiche sind zum Beispiel als U-Profile ausgebildet, welche die Kanten des mobilen Geräts umgreifen können. Dadurch kann sichergestellt werden, dass das mobile Gerät kipp-, rutsch- und wackelfrei in der Halteeinrichtung gehalten werden kann. Möglich ist es weiterhin im Rahmen der Erfindung, dass der Aufnahmebereich an eine Größe und/oder Bauart des mobilen Geräts anpassbar ist.

Die Halteeinrichtung umfasst erfindungsgemäß eine Rückwand. Die Rückwand erstreckt sich optional über die gesamte Länge und/oder Breite der Halteeinrichtung. Vorzugsweise fluchtet die Rückwand der Halteeinrichtung mit einer rückseitigen Begrenzung der Anzeigeeinrichtung. Insbesondere ist die Rückwand dazu ausgebildet, das mobile Gerät in dem Aufnahmebereich rückseitig zu stützen. Bevorzugt kann das mobile Gerät an der Rückwand anliegen und/oder sich an dieser abstützen, wenn es in dem Aufnahmebereich der Halteeinrichtung aufgenommen ist.

Optional weist die Rückwand mindestens eine Vertiefung und/oder Mulde auf. In der Vertiefung und/oder Mulde kann zum Beispiel eine Kameralinse des mobilen Geräts und/oder andere Funktionselemente des mobilen Geräts wie zum Beispiel Schalter, Taster, Anschlusselemente etc. aufgenommen werden. Dadurch kann ein sicherer Sitz des mobilen Geräts in dem Aufnahmebereich gewährleistet werden und eine Beschädigung der Kameralinse und/oder der anderen Funktionselemente vermieden werden.

Erfindungsgemäß weist die Halteeinrichtung eine Abstützeinrichtung auf, welche zur seitlichen Abstützung des mobilen Geräts und zur seitlichen Anlage an dem mobilen Gerät ausgebildet ist, insbesondere wenn das mobile Gerät in dem Aufnahmebereich aufgenommen ist. Bevorzugt ist die Abstützeinrichtung in einer ersten Position benachbart zu dem Aufnahmebereich angeordnet. Insbesondere ist die Abstützeinrichtung aus der ersten Position heraus bewegbar, wobei sie quer zu der Fahrtrichtung entlang der Rückwand auf den Aufnahmeraum zu oder in diesen hinein bewegbar ist. Die Bewegung der Abstützeinrichtung entlang der Rückwand erfolgt bevorzugt durch manuelles Verschieben. In möglichen alternativen Ausführungsformen kann die Abstützeinrichtung auch mittels Druckluft, hydraulisch erzeugter Kraft oder mittels eines elektromotorischen Antriebs entlang der Rückwand bewegt werden.

Vorzugsweise ist die Abstützeinrichtung entlang der Rückwand und/oder in dem Aufnahmebereich in mehreren weiteren Positionen arretierbar, um den Aufnahmebereich für das mobile Gerät passend in der Größe einzustellen. Besonders bevorzugt ist, dass die Abstützeinrichtung stufenlos arretierbar ist. Vorteilhaft ist, dass der Aufnahmebereich durch eine entsprechende Positionierung der Abstützeinrichtung an die Größe und/oder Bauart des mobilen Geräts angepasst werden kann. Dadurch ist die Möglichkeit gegeben, eine Vielzahl an unterschiedlichen mobilen Geräten in dem Aufnahmebereich aufzunehmen.

Vorzugsweise umfasst die Abstützeinrichtung einen der Aufnahmeabschnitte, welcher an einer der Kanten, z.B. an einer der Seitenkanten, des mobilen Geräts anliegen kann. Somit kann das mobile Gerät in dem Aufnahmebereich angeordnet werden und durch Heranbewegen und Anlegen der Abstützeinrichtung in dem Aufnahmebereich formschlüssig gesichert werden. In einer möglichen Ausführungsform der Erfindung ist die Abstützeinrichtung federnd, z.B. auf einer Druckfeder, gelagert. Insbesondere ist die Abstützeinrichtung mittels der Federkraft seitlich an das mobile Gerät andrückbar. Dadurch kann die Abstützeinrichtung nach Bedarf genau positioniert werden und das mobile Gerät in dem Aufnahmebereich formschlüssig gehalten werden.

Eine mögliche konstruktive Ausgestaltung der Erfindung sieht vor, dass die Abstützeinrichtung einen Angriffsbereich, z.B. einen aufgerauten Bereich, einen Griff oder eine Griffmulde, zum manuellen Angriff und zur manuellen Positionierung der Abstützeinrichtung in der benötigten Position umfasst. Beispielsweise ist der Angriffsbereich an einer Rückseite der Abstützeinrichtung optisch vorteilhaft integriert. Insbesondere ist die Abstützeinrichtung in der Halteeinrichtung so integriert, dass sie von dem Fahrer des Fahrzeugs und optional ergänzend von dem Beifahrer einfach hintergriffen werden kann, um den Angriffsbereich zu erreichen. Insbesondere betätigt der Fahrer oder auch der Beifahrer die Abstützeinrichtung mittels des Angriffsbereichs, um die Abstützeinrichtung federkraftunterstützt an das in dem Aufnahmebereich aufgenommene mobile Gerät seitlich anzulegen. Um das mobile Gerät wieder aus dem Aufnahmebereich zu entnehmen, kann die Abstützeinrichtung von dem mobilen Gerät entfernt und entgegen der Federkraft z.B. in die erste Position zurückgeschoben werden.

In einer möglichen Ausgestaltung der Erfindung umfasst die Halteeinrichtung eine Aufladeeinrichtung für das mobile Gerät. Vorzugsweise kann ein Akku des mobilen Geräts mittels der Aufladeeinrichtung geladen werden, insbesondere wenn das mobile Gerät in dem Aufnahmebereich aufgenommen ist.

Optional ist die Aufladeeinrichtung in der Rückwand integriert. In diesem Fall ist die Aufladeeinrichtung bevorzugt als eine induktive Ladestation ausgebildet. Alternativ oder optional ergänzend kann die Aufladeeinrichtung eine Ladeschnittstelle umfassen. Insbesondere wenn das mobile Gerät in dem Aufnahmebereich aufgenommen ist, kann es an die Ladeschnittstelle angeschlossen werden. Die Ladeschnittstelle kann zum Beispiel eine Ladebuchse oder ein Ladeadapter sein. Es ist auch möglich, eine mobile Ladestation, z. B. eine sogenannte Power Bank, mit der Ladeschnittstelle zu laden.

Die Ladeschnittstelle ist vorzugsweise beweglich und/oder verstellbar in der Halteeinrichtung, insbesondere in dem Aufnahmebereich, integriert. Hierzu kann sie z.B. auf einer Schiene angeordnet sein, entlang der sie verschiebbar oder verfahrbar ist. Beispielsweise kann die Ladeschnittstelle entlang der Aufnahmeabschnitte verschoben werden, sodass sie nach Bedarf positioniert werden kann. Dadurch kann die Ladeschnittstelle in vorteilhafter Weise an die Größe und an die Bauart des mobilen Geräts angepasst werden.

Optional ergänzend kann die Aufladeeinrichtung, insbesondere die Ladeschnittstelle und/oder die induktive Ladestation, eine Datenschnittstelle bilden. Die Datenschnittstelle kann über ein unsichtbar und/oder verdeckt in der Halteeinrichtung integriertes Kabel mit der Anzeigeeinrichtung und/oder mit einem Bordnetz des Fahrzeugs verbunden sein. Mittels der Datenschnittstelle kann das in dem Aufnahmebereich aufgenommene mobile Gerät signal- und datentechnisch mit der Anzeigeeinrichtung und/oder mit dem Bordnetz verbunden werden.

Durch die Verbindung mit der Anzeigeeinrichtung und/oder mit dem Bordnetz können Anzeigen, Funktionen und Dienste des mobilen Geräts mit dem Bordnetz und/oder mit der Anzeigeeinrichtung ausgetauscht werden. Insbesondere können Informationen und/oder Daten, die auf dem mobilen Geräts anzeigbar und/oder von diesem abrufbar sind, auf der Anzeigeeinrichtung angezeigt werden. Alternativ oder optional ergänzend können Daten und/oder Informationen, welche auf der Anzeigeeinrichtung anzeigbar und/oder von dieser abrufbar sind, auf dem mobilen Gerät angezeigt werden. Somit kann das Display des mobilen Geräts das Display der Anzeigeeinrichtung ergänzen und/oder teilweise ersetzen.

Im Rahmen der Erfindung ist es möglich, dass die Daten und Informationen des mobilen Geräts und/oder der Anzeigeeinrichtung über einen Touchscreen des mobilen Geräts als das Display bedient und bearbeitet werden können. Alternativ können die Daten und Informationen des mobilen Geräts und/oder der Anzeigeeinrichtung auch über Bedienelemente des Fahrzeugs bedient und bearbeitet werden.

Beispielsweise kann ein mit dem mobilen Gerät nutzbares Navigationssystem anstatt dem Navigationssystem des Fahrzeugs genutzt werden. Insbesondere kann auf das Navigationssystem des Fahrzeugs verzichtet werden und stattdessen standardmäßig das Navigationssystem des mobilen Geräts in dem Fahrzeug genutzt werden. Navigationsdaten können insbesondere von dem mobilen Gerät abgerufen und auf dem Display des mobilen Geräts angezeigt und bedient werden. Als ein weiteres Beispiel können Musik- und Textdateien genannt werden, welche anstatt auf der Anzeigeeinrichtung auf dem Display des mobilen Geräts -oder umgekehrt- angezeigt und bedient werden können.

Aufgrund der Möglichkeit der front- und/oder flächenbündigen Integration des mobilen Geräts ist insbesondere eine zumindest teilweise wechselseitige und/oder ergänzende Nutzung des in der Halteeinrichtung gehaltenen mobilen Geräts und der Anzeigeeinrichtung besonders ergonomisch umsetzbar, da das Display des mobilen Geräts das Display der Anzeigeeinrichtung optisch verlängert, vergrößert und/oder ergänzt.

Einen weiteren Gegenstand der Erfindung bildet eine Anordnung aus einem Armaturenbrett und aus dem mobilen Gerät, wobei das Armaturenbrett nach einem der Ansprüche 1 bis 7 ausgebildet ist. Das mobile Gerät ist als ein Smartphone oder Tablet ausgebildet. Es weist ein bevorzugt als Touchscreen ausgebildetes Display auf, welches die Anzeigeeinrichtung visuell und funktional ergänzt oder teilweise ersetzt. Das mobile Gerät ist in der Halteeinrichtung des Armaturenbretts so gehalten, dass dessen Sichtseite, insbesondere eine Vorderseite des Displays, mit dem Display der Anzeigeeinrichtung front- und/oder flächenbündig angeordnet ist und/oder fluchtet. Insbesondere kann die Sichtseite des mobilen Geräts das Display der Anzeigeeinrichtung optisch ergänzen und/oder verlängern. Auch in funktionaler Hinsicht kann das mobile Gerät die Anzeigeeinrichtung ergänzen oder teilweise ersetzen. Es kann somit in vorteilhafter Weise vermieden werden, dass das mobile Gerät als eine Art Fremdkörper in dem Fahrzeug, insbesondere an dem Armaturenbrett, angeordnet ist.

Ein Fahrzeug mit dem Armaturenbrett nach einem der Ansprüche 1 bis 7 44und ein Fahrzeug mit der Anordnung nach dem Anspruch 8 bilden weitere Gegenstände der Erfindung.

Eine Halteeinrichtung zum Halten eines mobilen Geräts zur Verwendung in einem Armaturenbrett nach einem der Ansprüche 1 bis 11 bildet einen weiteren Gegenstand der Erfindung.

Weitere Merkmale, Vorteile und Wirkungen der Erfindung ergeben sich aus der nachfolgenden Beschreibung bevorzugter Ausführungsbeispiele der Erfindung. Dabei zeigen:

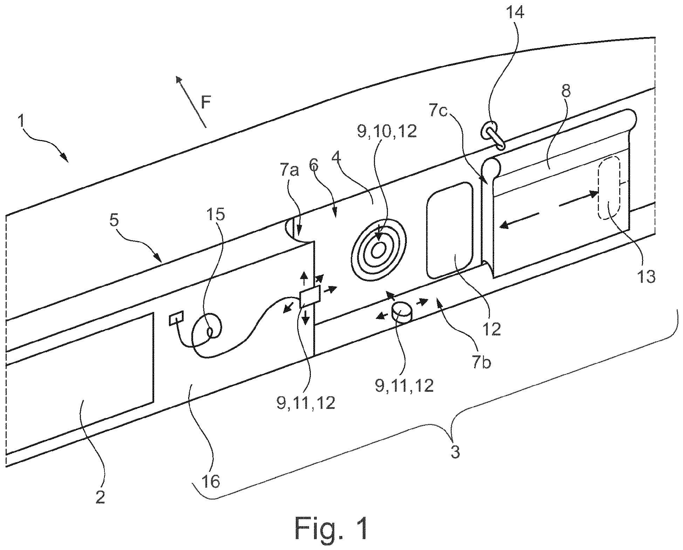

- Figur 1: eine perspektivische Draufsicht von vorne auf ein Armaturenbrett, in welchem eine Anzeigeeinrichtung und eine Halteeinrichtung für ein mobiles Gerät integriert ist.

Einander entsprechende oder gleiche Teile sind in den Figuren jeweils mit den gleichen Bezugszeichen versehen.

In der Figur 1 ist ein Armaturenbrett 1 in einer perspektivischen Draufsicht von vorne gezeigt. Das Armaturenbrett 1 ist zur Integration in einem Fahrzeug, zum Beispiel in einem Pkw oder Lkw ausgebildet. Das Armaturenbrett 1 kann in dem Fahrzeug so integriert werden, dass es sich quer zu einer Fahrtrichtung, insbesondere von einer Fahrerseite über eine Mitte des Fahrzeugs bis zu einer Beifahrerseite erstreckt. Die Mitte des Fahrzeugs kann durch eine in Fahrtrichtung F verlaufende Mittelkonsole definiert sein.

Das Armaturenbrett 1 umfasst eine Anzeigeeinrichtung 2, die als eine Instrumententafel ausgebildet ist. Die Anzeigeeinrichtung 2 umfasst ein Display zur digitalen Anzeige von Fahrzeugbetriebsdaten, zum Beispiel Fahrgeschwindigkeit und Motordrehzahl, und von Kontroll- und/oder Servicedaten, zum Beispiel Tank- und Ölfüllstand und Navigationsanzeigen. Die Anzeigeeinrichtung 2 ist als ein Anzeigecluster ausgebildet. Das Display ist auf der Fahrerseite, insbesondere in Fahrtrichtung F hinter einem nicht gezeigten Lenkrad des Fahrzeugs, angeordnet und erstreckt sich quer zu der Fahrtrichtung F in Richtung oder zu der Mitte des Fahrzeugs.

Das Armaturenbrett 1 umfasst eine Halteeinrichtung 3. Die Halteeinrichtung 3 ist dazu ausgebildet, ein mobiles Gerät zu halten, sodass es ist sicher in dem Fahrzeug genutzt und transportiert werden kann. Das mobile Gerät kann als ein Smartphone oder Tablet z.B. mit einem Touchscreen als Display ausgebildet sein. Die Halteeinrichtung 3 ist benachbart, insbesondere angrenzend an die Anzeigeeinrichtung 2 angeordnet. Die Halteeinrichtung 16 weist einen Gehäuseabschnitt 16 auf, der sich unmittelbar an die Anzeigeeinrichtung 2 anschließt.

Die Halteeinrichtung 3 weist eine Rückwand 4 auf. Die Rückwand 4 erstreckt sich über die gesamte Länge der Halteeinrichtung 3. Die Rückwand 4 schließt sich an eine rückseitige Begrenzung 5 der Anzeigeeinrichtung 2 an und fluchtet mit dieser. Insbesondere geht die rückseitige Begrenzung 5 der Anzeigeeinrichtung 2 zumindest optisch in die Rückwand 4 der Halteeinrichtung 3 über.

Die Halteeinrichtung 3 weist einen Aufnahmebereich 6 für das mobile Gerät auf. Der Aufnahmebereich 6 ist quaderförmig oder im Wesentlichen quaderförmig ausgebildet. Der Aufnahmebereich 6 umfasst mehrere, zum Beispiel drei Aufnahmeabschnitte 7a, 7b, 7c, die den Aufnahmebereich 6 seitlich und nach unten begrenzen. Die Aufnahmeabschnitte 7a, 7b, 7c sind als Schienen, insbesondere als U-Profile, dazu ausgebildet, das in dem Aufnahmebereich 6 aufgenommene mobile Gerät an seinen Kanten, z.B. an seiner Unterkante und an seinen Seitenkanten, zu umgreifen und formschlüssig in dem Aufnahmebereich 6 zu halten.

Die Halteeinrichtung 3 umfasst eine Abstützeinrichtung 8. Die Abstützeinrichtung 8 ist an der Rückwand 4 angeordnet. Sie ist entlang der Rückwand 4 beweglich, insbesondere verschiebbar und/oder verfahrbar. Dadurch ist die Abstützeinrichtung 8 in einem vorgegebenen Raster oder stufenlos entlang der Rückwand 4 positionierbar. Der Aufnahmeabschnitt 7c, der das mobile Gerät an einer seiner Kanten, z.B. an einer der Seitenkanten, greifen kann, ist in der Abstützeinrichtung 8 integriert.

Die Abstützeinrichtung 8 weist einen Angriffsbereich 13 auf, der auf einer Rückseite der Abstützeinrichtung 8 verdeckt angeordnet ist. Der Angriffsbereich 13 ist als eine aufgeraute Fläche ausgebildet. Alternativ kann der Angriffsbereich als ein Griff oder eine Griffmulde ausgebildet sein. Ein Fahrer des Fahrzeugs oder auch ein Beifahrer des Fahrzeugs kann in dem Angriffsbereich 13 angreifen, um die Abstützeinrichtung 8 entlang der Rückwand 4 zu verschieben. Durch das Verschieben der Abstützeinrichtung 8 entlang der Rückwand 4 kann der Aufnahmebereich 6 an eine Größe und Bauart des mobilen Geräts angepasst werden. Insbesondere kann der Aufnahmebereich 6 verschmälert oder verbreitert werden.

Die Abstützeinrichtung 8 ist zu dem Aufnahmebereich 6 hin federgelagert. Die Abstützeinrichtung 8 kann durch das Verschieben so positioniert werden, dass sie mittels einer Federkraft an das in dem Aufnahmebereich 6 angeordnete mobile Gerät seitlich angedrückt wird. Dadurch wird der Aufnahmeabschnitt 7c an die entsprechende Kante des mobilen Geräts angedrückt, wodurch das mobile Gerät formschlüssig in dem Aufnahmebereich 6 gesichert ist.

Wenn das mobile Gerät in dem Aufnahmebereich 4 aufgenommen ist und sich an der Rückwand 4 abstützt, ist es so in der Halteeinrichtung 3 gehalten, dass eine Sichtseite des mobilen Geräts, insbesondere eine Vorderseite des Displays, front-und/oder flächenbündig mit einer Vorderseite der Anzeigeeinrichtung 2 angeordnet ist und/oder mit dieser fluchtet. Somit kann das mobile Gerät die Anzeigeeinrichtung 2, insbesondere deren Display, optisch und/oder funktional erweitern und/oder verlängern.

In der Rückwand 4 ist eine Vertiefung und/oder Mulde 12 integriert, in der eine Kameralinse des mobilen Geräts oder andere Funktionselemente des mobilen Geräts, wie Schalter, Taster, Anschlusselemente etc. Platz finden, wenn das mobile Gerät in dem Aufnahmebereich 6 aufgenommen ist. Die Vertiefung und/oder Mulde 12 gewährleistet, dass die Kameralinse und/oder die anderen Funktionselemente beschädigungsfrei bleiben, wenn das mobile Gerät in den Aufnahmebereich 6 aufgenommen ist.

Die Halteeinrichtung 3 weist eine Aufladeeinrichtung 9 auf. Die Aufladeeinrichtung 9 ist als eine induktive Ladestation 10 in der Rückwand 4 integriert. Dadurch kann das mobile Gerät induktiv geladen werden, wenn es in dem Aufnahmebereich 6 angeordnet ist und sich an der Rückwand 4 abstützt. Die Aufladeeinrichtung 9 ist alternativ oder ergänzend als eine Ladeschnittstelle 11 ausgebildet, an welche das mobile Gerät angeschlossen werden kann, wenn es in dem Aufnahmebereich 6 aufgenommen ist. Die Ladeschnittstelle 11 ist als eine Ladebuchse oder als ein Ladestecker ausgebildet.

Die Ladeschnittstelle 11 ist nach Bedarf flexibel anordbar, sodass sie unabhängig von Größe und Bauform des mobilen Geräts zum Aufladen genutzt werden kann. Hierzu kann sie entlang der Aufnahmeabschnitte 7a, 7b, 7c bewegt, insbesondere verschoben und/oder verfahren werden. Beispielsweise kann sie an dem Aufnahmeabschnitt 7a oder 7c angeordnet sein, sodass das mobile Gerät z.B. an seinen Seitenkanten mit der Ladeschnittstelle 11 verbunden werden kann. Die Ladeschnittstelle 11 kann auch an dem Aufnahmeabschnitt 7b angeordnet werden, sodass das mobile Gerät z.B. an seiner Unterkante mit der Ladeschnittstelle 11 verbunden werden kann.

Die Aufladeeinrichtung 9 bildet auch eine Datenschnittstelle12. Das mobile Gerät kann über die Datenschnittstelle 12 mit der Anzeigeeinrichtung 2 und/oder mit einem Bordnetz des Fahrzeugs verbunden werden, wenn das Armaturenbrett 1 in dem Fahrzeug integriert ist. Die Datenschnittstelle 12 ist hierfür mittels eines verdeckt in dem Gehäuseabschnitt 16 angeordneten Kabels 15 an die Anzeigeeinrichtung 2 und/oder an das Bordnetz angebunden. Dadurch ist es ermöglicht, dass Daten und Signale zwischen dem mobilen Gerät, der Anzeigeeinrichtung 2 und/oder dem Bordnetz ausgetauscht werden können. Beispielsweise können auf dem Display des mobilen Geräts Informationen und/oder Navigationsdaten angezeigt werden, die für den Fahrer des Fahrzeugs oder auch für den Beifahrer nutzbar sind. Auf die Bereitstellung von Navigationsdaten auf der Anzeigeeinrichtung kann verzichtet werden. Somit kann das in der Halteeinrichtung gehaltene mobile Gerät die Anzeigeeinrichtung 2 funktional erweitern und/oder sogar teilweise ersetzen.

An der Rückwand 4 ist auch ein Befestigungsmittel 14, zum Beispiel eine Schraube, angeordnet. Das Befestigungsmittel 14 ist zur Befestigung von kabellosen Ladegeräten, z.B. einer sogenannten Power Bank, vorgesehen. Es besteht die Möglichkeit, die Power Bank an der Ladeschnittstelle 11 anzuschließen und aufzuladen.

### Bezugszeichenliste:

- 1: Armaturenbrett
- 2: Anzeigeeinrichtung
- 3: Halteeinrichtung
- 4: Rückwand
- 5: Rückseitige Begrenzung
- 6: Aufnahmebereich
- 7: Aufnahmeabschnitte
- 8: Abstützeinrichtung
- 9: Aufladeeinrichtung
- 10: Induktive Ladestation
- 11: Ladeschnittstelle
- 12: Datenschnittstelle
- 13: Angriffsbereich
- 14: Befestigungsmittel
- 15: Kabel
- 16: Gehäuseabschnitt
- F: Fahrtrichtung

## Patentansprüche

1. Armaturenbrett (1) für ein Fahrzeug,
wobei das Armaturenbrett (1) eine Anzeigeeinrichtung (2) zur Anzeige von Fahrzeugbetriebsdaten, Kontroll- und/oder Servicedaten aufweist,
wobei das Armaturenbrett (1) eine Halteeinrichtung (3) für ein mobiles Gerät umfasst,
wobei die Halteeinrichtung (3) so in dem Armaturenbrett (1) integriert ist, dass das mobile Gerät front- und/oder flächenbündig mit der Anzeigeeinrichtung (2) anordbar ist,
**dadurch gekennzeichnet, dass** die Halteeinrichtung (3) mindestens einen Aufnahmebereich (6) zur Aufnahme des mobilen Geräts umfasst, wobei der Aufnahmebereich (6) an eine Größe und Bauart des mobilen Geräts anpassbar ist, dass die Halteeinrichtung (3) eine Rückwand (4) zur rückseitigen Abstützung und/oder Anlage des mobilen Geräts in dem Aufnahmebereich (6) umfasst, wobei die Rückwand (4) mit einer rückseitigen Begrenzung (5) der Anzeigeeinrichtung (2) fluchtet, dass die Rückwand (4) eine Vertiefung (12) für eine Kameralinse und/oder für andere Funktionselemente des mobilen Geräts aufweist und dass die Halteeinrichtung (3) eine Abstützeinrichtung (8) zur seitlichen Abstützung des mobilen Geräts und/oder zur seitlichen Anlage an dem mobilen Gerät aufweist, wobei die Abstützeinrichtung (8) zur Anpassung des Aufnahmebereichs (6) an die Größe und/oder Bauart des mobilen Geräts entlang der Rückwand (4) bewegbar und/oder in mehreren Positionen arretierbar ist..

2. Armaturenbrett (1) nach Anspruch 1, **dadurch gekennzeichnet, dass** die Halteeinrichtung (3) benachbart oder angrenzend an die Anzeigeeinrichtung (2) in dem Armaturenbrett (1) integriert ist.

3. Armaturenbrett (1) nach Anspruch 2, **dadurch gekennzeichnet, dass** die Abstützeinrichtung (8) federnd gelagert ist, sodass sie mittels Federkraft an das mobile Gerät andrückbar ist.

4. Armaturenbrett (1) nach Anspruch 3, **dadurch gekennzeichnet, dass** die Abstützeinrichtung (8) einen Angriffsbereich (13) zur manuellen Positionierung der Abstützeinrichtung (8) umfasst.

5. Armaturenbrett (1) nach einem der vorhergehenden Ansprüche, **dadurch gekennzeichnet, dass** die Halteeinrichtung (3) eine Aufladeeinrichtung (9) für das mobile Gerät umfasst, wobei die Aufladeeinrichtung (9) in der Rückwand (4) als eine induktive Ladestation (10) integriert ist und/oder wobei die Aufladeeinrichtung (9) eine Ladeschnittstelle (11) zum Anschluss des mobilen Geräts umfasst.

6. Armaturenbrett (1) nach Anspruch 5, **dadurch gekennzeichnet, dass** die Ladeschnittstelle (11) zur Anpassung an die Größe und Bauart des mobilen Geräts beweglich und/oder verstellbar in der Halteeinrichtung (3) integriert ist.

7. Armaturenbrett (1) nach Anspruch 5 oder 6, **dadurch gekennzeichnet, dass** die Aufladeeinrichtung (9) eine Datenschnittstelle (12) bildet, mittels der das mobile Gerät signal- und datentechnisch mit der Anzeigeeinrichtung (2) und/oder mit einem Bordnetz des Fahrzeugs, in dem das Armaturenbrett (1) integrierbar ist, verbindbar ist.

8. Anordnung aus einem Armaturenbrett (1) nach einem der vorhergehenden Ansprüche und aus einem mobilen Gerät, wobei das mobile Gerät ein Display aufweist, wobei das Display die Anzeigeeinrichtung (2) visuell und funktional ergänzt oder teilweise ersetzt.

9. Fahrzeug mit dem Armaturenbrett (1) nach einem der Ansprüche 1 bis 7.

10. Fahrzeug mit der Anordnung nach Anspruch 8.

## Claims

1. Dashboard (1) for a vehicle, wherein the dashboard (1) has a display device (2) for displaying vehicle operating data, control and/or service data, wherein the dashboard (1) comprises a holding device (3) for a mobile device, wherein the holding device (3) is integrated in the dashboard (1) in such a way that the mobile device can be arranged at the front and/or flush with the display device (2), **characterized in that** the holding device (3) comprises at least one receiving area (6) for receiving the mobile device, wherein the receiving area (6) can be adapted to a size and design of the mobile device, that the holding device (3) comprises a rear wall (4) for supporting the rear and/or placing the mobile device in the receiving area (6), wherein the rear wall (4) is aligned with a rear boundary (5) of the display device (2), that the rear wall (4) has a recess (12) for a camera lens and/or for other functional elements of the mobile device and that the holding device (3) has a support device (8) for laterally supporting the mobile device and/or for laterally resting on the mobile device, wherein the support device (8) can be moved along the rear wall (4) and/or locked in several positions to adapt the receiving area (6) to the size and/or design of the mobile device.

2. Dashboard (1) according to claim 1, **characterized in that** the holding device (3) is integrated in the dashboard (1) adjacent or adjacent to the display device (2).

3. Dashboard (1) according to claim 2, **characterized in that** the support device (8) is spring-mounted so that it can be pressed against the mobile device by means of spring force.

4. Dashboard (1) according to claim 3, **characterized in that** the support device (8) comprises an engagement area (13) for manual positioning of the support device (8).

5. Dashboard (1) according to one of the preceding claims, **characterized in that** the holding device (3) comprises a charging device (9) for the mobile device, wherein the charging device (9) is integrated in the rear wall (4) as an inductive charging station (10) and/or wherein the charging device (9) comprises a charging interface (11) for connecting the mobile device.

6. Dashboard (1) according to claim 5, **characterized in that** the charging interface (11) is integrated in the holding device (3) in a movable and/or adjustable manner to adapt to the size and design of the mobile device.

7. Dashboard (1) according to claim 5 or 6, **characterized in that** the charging device (9) forms a data interface (12) by means of which the mobile device can be connected in terms of signal and data technology to the display device (2) and/or to an on-board network of the vehicle in which the dashboard (1) can be integrated.

8. Arrangement comprising a dashboard (1) according to one of the preceding claims and a mobile device, wherein the mobile device has a display, wherein the display visually and functionally supplements or partially replaces the display device (2).

9. Vehicle with the dashboard (1) according to one of claims 1 to 7.

10. Vehicle with the arrangement according to claim 8.

## Revendications

1. Tableau de bord (1) pour un véhicule, dans lequel le tableau de bord (1) comporte un dispositif d'affichage (2) pour afficher des données de fonctionnement du véhicule, des données de commande et/ou de service, dans lequel le tableau de bord (1) comprend un dispositif de maintien (3) pour un appareil mobile, le dispositif de maintien (3) étant intégré au tableau de bord (1) de telle sorte que le dispositif mobile puisse être disposé devant et/ou affleurant le dispositif d'affichage (2), **caractérisé en ce que** le dispositif de maintien (3) comprend au moins une zone de réception (6) pour recevoir le dispositif mobile, la zone de réception (6) étant adaptable à une taille et une conception du dispositif mobile, de telle sorte que le dispositif de maintien (3) comporte une paroi arrière (4) pour le support arrière et/ou la butée du dispositif mobile dans la zone de réception (6), la paroi arrière (4) aligné avec une limite arrière (5) du dispositif d'affichage (2), la paroi arrière (4) présente un évidement (12) pour un objectif d'appareil photo et/ou pour d'autres éléments fonctionnels de l'appareil mobile et **en ce que** le dispositif de maintien (3) présente un dispositif de support (8) pour le support latéral de l'appareil mobile et/ou pour le contact latéral avec l'appareil mobile, le dispositif de support (8) pour régler la position de réception zone (6) Selon la taille et/ou la conception de l'appareil mobile, celui-ci peut être déplacé le long de la paroi arrière (4) et/ou verrouillé dans plusieurs positions.

2. Tableau de bord (1) selon la revendication 1, **caractérisé en ce que** le dispositif de maintien (3) est intégré dans le tableau de bord (1) adjacent ou adjacent au dispositif d'affichage (2).

3. Tableau de bord (1) selon la revendication 2, **caractérisé en ce que** le dispositif de support (8) est monté élastiquement de manière à pouvoir être plaqué contre le dispositif mobile au moyen de la force d'un ressort.

4. Tableau de bord (1) selon la revendication 3, **caractérisé en ce que** le dispositif support (8) comprend une zone d'engagement (13) pour le positionnement manuel du dispositif support (8).

5. Tableau de bord (1) selon l'une des revendications précédentes, **caractérisé en ce que** le dispositif de maintien (3) comprend un dispositif de chargement (9) pour l'appareil mobile, le dispositif de chargement (9) dans la paroi arrière (4) faisant office de une station de charge inductive (10) est intégrée et/ou le dispositif de charge (9) comprend une interface de charge (11) pour connecter le dispositif mobile.

6. Tableau de bord (1) selon la revendication 5, **caractérisé en ce que** l'interface de recharge (11) est intégré de manière mobile et/ou réglable dans le dispositif de maintien (3) pour s'adapter à la taille et à la conception de l'appareil mobile.

7. Tableau de bord (1) selon la revendication 5 ou 6, **caractérisé en ce que** le dispositif de chargement (9) forme une interface de données (12) au moyen de laquelle l'appareil mobile communique avec le dispositif d'affichage (2) et/ou avec un signal et technologie des données. Le système électrique du véhicule, dans lequel le tableau de bord (1) peut être intégré, peut être connecté.

8. Agencement constitué d'un tableau de bord (1) selon l'une des revendications précédentes et d'un appareil mobile, l'appareil mobile comportant un afficheur, l'afficheur complétant visuellement et fonctionnellement ou remplaçant partiellement le dispositif d'affichage (2).

9. Véhicule avec le tableau de bord (1) selon l'une des revendications 1 à 7.

10. Véhicule avec l'agencement selon la revendication 8.
